(19) Europäisches Patentamt
European Patent Office
Office européen des brevets

(11) Publication number: **0 030 048**
**B1**

(12) **EUROPEAN PATENT SPECIFICATION**

(45) Date of publication of patent specification: **22.02.84**

(51) Int. Cl.³: **C 08 F 14/06**, C 08 F 2/20, C 08 F 2/18

(21) Application number: **80201065.2**

(22) Date of filing: **10.11.80**

(54) **Process for the suspension (co)polymerization of vinyl chloride and products entirely or partly consisting of the resulting (co)polymers.**

(30) Priority: **30.11.79 NL 7908674**

(43) Date of publication of application:
**10.06.81 Bulletin 81/23**

(45) Publication of the grant of the patent:
**22.02.84 Bulletin 84/8**

(84) Designated Contracting States:
**BE DE FR GB IT NL**

(56) References cited:
**DE - A - 2 659 103**

(73) Proprietor: **AKZO N.V.**
**Velperweg 76**
**NL-6824 BM Arnhem (NL)**

(72) Inventor: **Schreurs, Petrus Hendrikus Maria**
**van Oldenielstraat 4**
**NL-7415 EH Deventer (NL)**
Inventor: **Verhelst, Willem Franciscus**
**Pikeursbaan 2**
**NL-7213 BT Gorssel (O) (NL)**

(74) Representative: **Sieders, René et al,**
**P.O. Box 314**
**NL-6800 AH Arnhem (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 030 048 B1

# Process for the suspension (co)polymerization of vinyl chloride and products entirely or partly consisting of the resulting (co)polymers

The present invention relates to a process for the suspension (co)polymerization of vinyl chloride in the presence of a radical initiator and at least two suspension stabilizers.

A process of the type indicated above is known from, int.al., British Patent Specifications 1 524 492 and 1 541 386. The two patent specifications describe the use of a water-soluble poly-vinyl alcohol in combination with a partly hydrolysed polyvinyl acetate which is poorly or not at all soluble in water alone. Also in the isolated state, this last-mentioned compound is generally difficult to handle. In actual practice this has led to this type of suspension stabil-izer mostly being used as solution in methanol. For some uses, however, the presence of methanol is considered a drawback.

The present invention relates to a process of the type indicated above and is characterized in that the suspension stabilizers used at least comprise a compound selected from the group consisting of water-soluble, partly hydrolysed polyvinyl acetates and methyl hydroxypropyl cellulose and at least an N-alkyl gluconamide having an alkyl group containing 16 to 20 carbon atoms.

The first mentioned compounds are referred to hereinafter as primary and the N-alkyl gluconamides as secondary stabilizers.

In their solid state all these stabilizers are satisfactory to handle. Moreover the use of this combination of primary and secondary stabilizer results in obtaining a (co)polymer having a very small number of fish eyes.

It has further been observed that partial replacement of only primary stabilizer with the present N-alkyl gluconamide leads to a substantial increase in plasticizer absorption without resulting in an appreciable decrease of the bulk density of the (co)polymer.

It should be added that British Patent Specification 1 543 431 describes as stabilizer system for vinyl chloride polymerization a combination of a methyl hydroxypropyl cellulose and a polyvinyl alcohol having an acetate content of 61,5 to 70,5 per cent by weight.

The process according to the invention may be used for the preparation of polyvinyl chloride by suspension polymerization of vinyl chloride and for the preparation of vinyl chloride copolymers by causing the polymerization to take place in the presence of other ethylenically unsaturated monomers capable of being polymerized with vinyl chloride. Examples of these monomers include vinylidene chloride, vinylidene fluoride; esters of acrylic acid, such as methyl acrylate, ethyl acrylate, butyl acrylate, octyl acrylate, cyanoethyl acrylate and the like; esters of methacrylic acid, such as methyl methacrylate, butyl methacrylate and the like; styrene and styrene derivatives such as methyl styrene, vinyl toluene, chlorostyrene and the like; acrylonitrile; ethyl vinyl benzene; vinyl naphthalene and the like; dialkenes such as butadiene, isoprene, chloroprene and the like; and other vinylidene monomers.

The process according to the invention is carried out in an aqueous medium, preferably in demineralized water.

Use may be made of a monomer to water ratio in the range of about 1:1 to 1:3, preferably 1:1,3 to 1:2.

Polymerization is carried out in the presence of radical generating catalysts. Examples of suitable catalysts include: organic peroxides, such as dibenzoyl peroxide, dilauroyl peroxide, 2,4-dichlorobenzoyl peroxide; peresters, such as tert.butyl peracetate, tert.butyl peroctoate, tert-butyl perneodecanoate, tert.butyl perpivalate; dialkyl peroxydicarbonates, such as diisopropyl peroxydicarbonate, diethyl peroxydicarbonate, dicyclohexyl peroxydicarbonate, diethyl cyclohexyl peroxycarbonate, dicetyl peroxydicarbonate, dimyristyl peroxydicarbonate, ditert.butyl cyclohexyl peroxydicabonate; azo compounds, such as azodiisobutyro dinitrile, azo-bisdimethyl valero dinitrile; and mixed anhydrides of organic sulphoperacids and carboxylic acids, such as acetylcyclohexyl sulphonyl peroxide.

Also use may be made of mixtures of radical generating catalysts. The catalyst is generally employed in an amount of 0,01 to 0,3% by weight, preferably 0,01—0,15% by weight, calculated on the total amount of monomer.

The present process is carried out in the presence of at least a primary and a secondary suspension stabilizer. The present primary stabilizer is to be selected from the group consisting of water-soluble, partly hydrolysed polyvinyl acetates and methylhydroxypropyl cellulose.

The polyvinyl acetate to be applied is generally characterized in that the viscosity of a 4%-aqueous solution at 20°C is in the range of 1 to 100 mPa.s, and preferably 72 to 90 mole per cent of it is hydrolysed. As examples thereof may be mentioned products marketed by Nippon Gohsei under the trade name Gosehnol® GH 20 (viscosity of 4%-aqueous solution: 40—46 mPa.s, 87—89 mole % hydrolysed) and under the trade name Gosehnol® KP 08 (viscosity of 4%-aqueous solution: 6—9 mPa.s, 71—75 mole % hydrolysed).

An example of methylhydroxypropyl cellulose is a product marketed by Dow Chemical under the tradename Methocel® F 50. Use also may be made of mixtures of the above compounds or of the above compounds mixed with other stabilizers that are known to be used for this purpose.

The present primary stabilizers are generally employed in an amount of 0,005—0,50 per cent by weight, calculated on the weight of the monomer. By preference use should be made of an amount of 0,01—0,10 per cent by weight.

As secondary suspension stabilizer to be contained in the reaction mixture is to serve at least an N-alkyl gluconamide of the general formula:

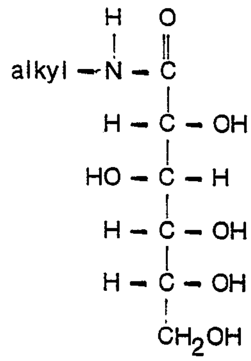

wherein the alkyl group has 16 to 20 carbon atoms.

When the alkyl group has less than 16 carbon atoms, the compound has insufficient dispersing power, whereas N-alkyl gluconamides having an alkyl group containing more than 20 carbon atoms exhibit insufficient solubility in the aqueous medium, which also effects dispersing power.

Also mixtures of the present N-alkyl gluconamides may be used. It is preferred that N-octadecyl gluconamide should be used as secondary stabilizer. The amount of N-alkyl gluconamide to be employed is generally 0,01 to 0,2% by weight, preferably 0,02 to 0,10% by weight, calculated on the weight of the monomer.

Polymerization may be carried out in the usual way, i.e. in conventional polymerization autoclaves at a temperature in the range of 30° to 75°C, preferably 40° to 70°C.

The invention will be further described in the following examples.

Example 1

Into a 1-litre glass autoclave equipped with the usual accessories there were introduced: 170 g water; 0,2 g $NaHCO_3$; 0,033 g Gohsehnol® KP 08 (a water soluble, partly hydrolysed polyvinyl acetate) and 0,067 g N-octadecyl gluconamide.

The autoclave was evacuated and flushed 5 times with $N_2$ while kept at 20°C. There were added 0,077 g dimyristyl peroxydicarbonate and 100 g vinyl chloride and the temperature was raised to 55°C, with stirring at a speed of 750 r.p.m.

After 7 hours' polymerization the remaining monomer was removed, the suspension filtered off, washed with water and dried at 50°C. The results are summarized in Table I.

Comparative experiments were carried out in which instead of N-octadecyl gluconamide the suspension stabilizers Gohsenol® KP 08, Armotan® MP (sorbitan monoplamitate), Armotan® ML (sorbitan monolaurate), Tween® 20 (polyoxyethylene (20) monolaurate) and Tween® 21 (polyoxyethylene (4) monolaurate) were used. Only the results obtained with Tween® 21 compared with those obtained with N-octadecyl gluconamide.

When only Gohsenol® KP 08 was used, the results obtained were distinctly poorer. In all other cases destabilization of the suspension was observed after 1 to 2 hours' polymerization.

Example 2

Polyvinyl chloride was prepared in the same way as in Example 1 from 170 g water; 0,2 g $NaHCO_3$; 0,033 g Gohsenol® GH 20 (a water soluble, partly hydrolysed polyvinyl acetate); 0,067 g N-octadecyl gluconamide; 0,077 g dimyristyl peroxy dicarbonate and 100 g vinyl chloride. Table I shows the results obtained. Comparative experiments were again carried out in which N-octadecyl gluconamide had been replaced with Gohsenol® GH 20, Armotan® MP (sorbitan monopalmitate), Tween® 20 (polyoxyethylene (20) monolaurate) and Tween® 21 (polyoxyethylene (4) mono-laurate).

When Tween® 20 was used, the suspension was subject to destabilization within 1 to 2 hours. The results obtained with the other stabilizers are summarized in Table I and are distinctly inferior to those obtained with N-octadecyl gluconamide, particularly as far as plasticizer absorption and number of fish eyes are concerned.

Example 3

The procedure of Example 1 was repeated, but in such a way that Methocel® F 50 (methylhydroxypropyl cellulose) was used instead of Gohsehnol® KP 08. For comparison an experiment was carried out in which as stabilizer only 0,1 g Methocel® F 50 was employed. For the results, see Table I.

TABLE I

| | Example 1 | | | Example 2 | | | | Example 3 | |
|---|---|---|---|---|---|---|---|---|---|
| | acc. to invention | for comparison | | acc. to invention | for comparison | | | acc. to invention | for comparison |
| Gohsenol®KP 08 | 0,033 | 0,100 | 0,033 | | | | | – | – |
| Gohsenol®GH 20 | – | – | – | 0,033 | 0,100 | 0,033 | 0,033 | – | – |
| Methocel®F 50 | – | – | – | – | – | – | – | 0,033 | 0,100 |
| N-octadecyl gluconamide | 0,067 | – | – | 0,067 | – | – | – | 0,067 | – |
| Armotan®MP | – | – | – | – | – | 0,067 | – | – | – |
| Tween®21 | – | – | 0,067 | – | – | – | 0,067 | – | – |
| Conversion (%) | 92 | 90 | 91 | 90 | 87 | 89 | 88 | 91 | 88 |
| Bulk density (g/cm³) | 0,54 | 0,49 | 0,53 | 0,51 | 0,52 | 0,52 | 0,50 | 0,50 | 0,53 |
| Dry flow (g/s) | 4,5 | 4,3 | 4,1 | 4,1 | 4,7 | 4,3 | 4,0 | 4,2 | 4,8 |
| Plasticizer absorption (%) (1) | 24 | 21 | 25 | 26 | 11 | 17 | 19 | 22 | 14 |
| Mean particle size (μm) | 225 | 168 | 254 | 262 | 148 | 224 | 228 | 194 | 127 |
| Spread (%)(2) | 43 | 37 | 56 | 45 | 80 | 55 | 58 | 58 | 48 |
| Fish eyes ($dm^{-2}$) (3) | 0 | 47 | 0 | 400 | 5900 | 1200 | 1600 | 0 | 110 |

(1) Determined in accordance with DIN 53417, p.1 Centrifuging method.

(2) Determined in accordance with ASTM D 1921–63, Method A.

(3) Determined in accordance with O. Leucks, Kunstoffe 50(4) 1960, pp. 227–234.

**Claims**

1. A process for the suspension (co)polymerization of vinyl chloride in the presence of a radical initiator and at least two suspension stabilizers, characterized in that the suspension stabilizers used at least comprise a primary stabilizer selected from the group consisting of watersoluble, partly hydrolysed polyvinyl acetates and methyl hydroxypropyl cellulose and a secondary suspension stabiliser consisting of an N-alkyl gluconamide having an alkyl group containing 16 to 20 carbon atoms.

2. A process according to claim 1, characterized in that (co)polymerization takes place in the presence of 0,01 to 0,2 per cent by weight of N-alkyl gluconamide, calculated on the amount of monomer.

3. A process according to claims 1 or 2, characterized in that the N-alkyl gluconamide used is N-octadecyl gluconamide.

4. Products entirely or partly prepared from vinyl chloride (co)polymers obtained by the process of any one of the preceding claims.

**Revendications**

1. Procédé de (co)polymérisation en suspension de chlorure de vinyle en présence d'un inducteur de radicaux et d'au moins deux stabilisateurs de suspension, caractérisé en ce que les stabilisateurs de suspension utilisés comprennent au moins un stabilisateur primaire choisi dans le groupe constitué par les acétates de polyvinyle partiellement hydrolysés solubles dans l'eau et la méthyl-hydroxypropyl-cellulose et un stabilisateur de suspension secondaire consistant en un N-alcoyl-gluconamide ayant un groupe alcoyle en $C_{16}$ à $C_{20}$.

2. Procédé selon la revendication 1, caractérisé en ce que la (co)polymérisation s'effectue en présence de 0,01 à 0,2% en poids de N-alcoyl-gluconamide, calculé par rapport à la quantité de monomère.

3. Procédé selon l'une des revendications 1 ou 2 caractérisé en ce que le N-alcoyl-gluconamide utilisé est le N-octadécyl-gluconamide.

4. Produits entièrement ou partiellement préparés à partir de (co)polymères de chlorure de vinyle obtenus par le procédé de l'une quelconque des revendications précédentes.

**Patentansprüche**

1. Ein Verfahren zur Suspensions (co)polymerisierung von Vinylchlorid in Gegenwart eines radikalischen Initiators und von mindestens zwei Suspensionsstabilisatoren, dadurch gekennzeichnet, dass die verwendeten Suspensionsstabilisatoren mindestens eine primärer Stabilisator, ausgewählt aus der Gruppe, welche aus wasserlöslichen teilweise hydrolysierten Polyvinylacetaten und Methylhydroxypropycellulose besteht, und ein Sekundärer Suspensionsstabilisator bestehend aus einem N-Alkylgluconamid mit einer Alkylgruppe enthalten welche 16 bis 20 Kohlenstoffatome aufweist.

2. Ein Verfahren gemäss Anspruch 1, dadurch gekennzeichnet, dass die (Co)polymerisierung in Anwesenheit von 0,01 bis 0,2 Gewichtsprozent N-Alkylgluconamid, berechnet auf die Menge an Monomer, stattfindet.

3. Ein Verfahren gemäss Anspruch 1 oder 2, dadurch gekennzeichnet, dass das verwendete N-Alkylgluconamid N-Octadecylgluconamid ist.

4. Produkte, welche ganz oder teilweise aus Vinylchlorid-(co)polymeren hergestellt sind, welche durch ein Verfahren nach irgendeinem der vorhergehenden Ansprüche erhalten worden sind.